(19) Europäisches Patentamt
European Patent Office
Office européen des brevets

(11) Veröffentlichungsnummer: **0 043 794**
**B1**

(12) # EUROPÄISCHE PATENTSCHRIFT

(45) Veröffentlichungstag der Patentschrift: **15.02.84**

(51) Int. Cl.³: **C 09 B 55/00**, C 09 B 45/16 // D06P3/02

(21) Anmeldenummer: **81810205.5**

(22) Anmeldetag: **29.05.81**

(54) **Neue Chromkomplexfarbstoffe, ihre Herstellung und Verwendung.**

(30) Priorität: **05.06.80 CH 4345/80**

(43) Veröffentlichungstag der Anmeldung: **13.01.82 Patentblatt 82/2**

(45) Bekanntmachung des Hinweises auf die Patenterteilung: **15.02.84 Patentblatt 84/7**

(84) Benannte Vertragsstaaten: **BE CH DE FR GB IT LI**

(56) Entgegenhaltungen:
**FR - A - 1 599 875**
**FR - A - 2 325 695**
**FR - A - 2 392 087**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG, Patentabteilung Postfach, CH-4002 Basel (CH)**

(72) Erfinder: **Püntener, Alois, Dr., Im Hard 5, CH-4310 Rheinfelden (CH)**

EP 0 043 794 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

# Neue Chromkomplexfarbstoffe, ihre Herstellung und Verwendung

Die vorliegende Erfindung betrifft neue Chromkomplexfarbstoffe der Formel (I)

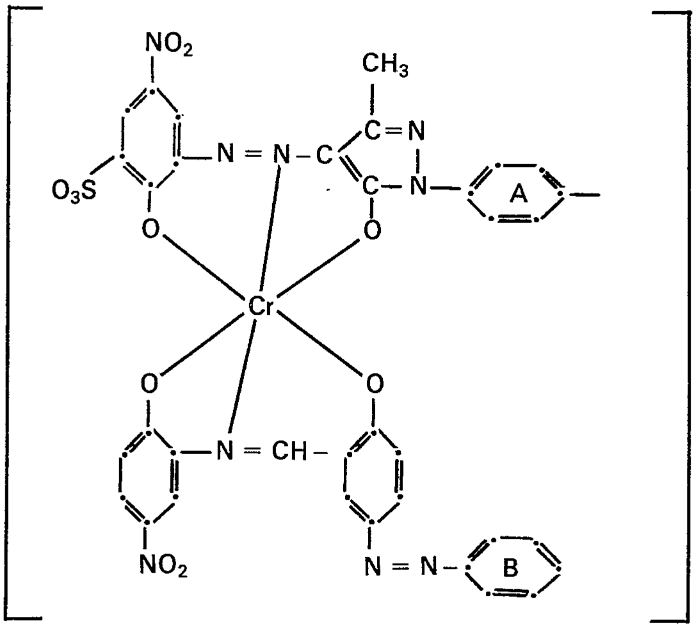

$\ominus\ominus$

2 $Me^{\oplus}$

(I)

worin die Phenylreste A und B unabhängig voneinander unsubstituiert sind oder ein- oder zweimal durch Chlor, Methyl, Ethyl, Methoxy oder Ethoxy substituiert sind und worin $Me^{\oplus}$ ein Kation bedeutet.

Das Kation $Me^{\oplus}$ stellt z.B. ein Ammonium- oder Alkalikation, wie das Kaliumkation, vorzugsweise aber ein Lithium- oder Natriumkation dar.

Vorzugsweise tragen die Penylreste A und B zusammen nicht mehr als zwei der genannten Substituenten und von besonderem Interesse wegen seiner guten färberischen Eigenschaften und seiner leichten Zugänglichkeit ist der Farbstoff der oben angegebenen Formel, bei dem die Phenylreste A und B unsubstituiert sind.

Die neuen Farbstoffe werden hergestellt, indem man z.B. in an sich bekannter Art und Weise einen Azofarbstoff der Formel (II)

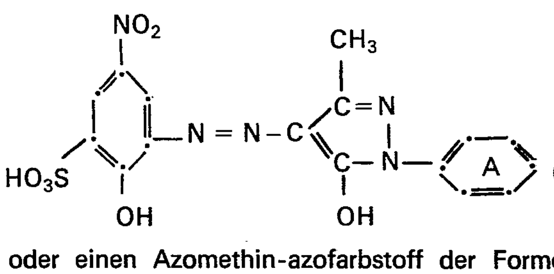

(II)

oder einen Azomethin-azofarbstoff der Formel (III)

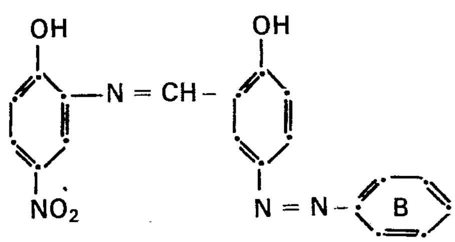

(III)

mit einem chromabgebenden Mittel zum 1:1-Chromkomplex umsetzt und diesen anschliessend mit dem nichtmetallisierten Farbstoff der Formeln (III) oder (II) zum 1:2-Chromkomplex reagieren lässt.

Vorzugsweise stellt man jedoch zunächst den 1:1-Chromkomplex des Monoazofarbstoffes der Formel (II) her und setzt diesen anschliessend mit einem Gemisch aus dem Aminophenol der Formel (IV)

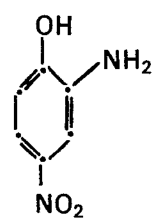

(IV)

und einem Azofarbstoff der Formel (V)

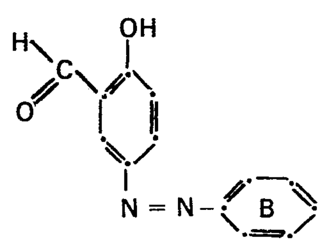

(V)

um.

Anstelle der Hydroxygruppen können die Ausgangsverbindungen der Formel II in der Diazokomponenten auch Gruppen enthalten, aus denen bei der Chromierung die Hydroxygruppe gebildet wird, wie z.B. niedrigmolekulare Acyloxy- oder Alkoxy-, insbesondere die Methoxygruppe.

Die Überführung des Azofastoffes der Formel (II) oder des Azomethin-azofarbstoffes der Formel (III) in den 1:1-Chromkomplex erfolgt nach üblichen, an sich bekannten Methoden, z.B. indem man die Umsetzung in saurem Medium mit einem Salz des dreiwertigen Chroms, wie Chromformiat, Chromsulfat, Chromchloridhexahydrat oder Chromfluorid, bei Siedetemperatur oder bei 100 °C übersteigenden Temperaturen, gegebenenfalls unter Druck ausführt, in wässriger Lösung oder in den unten aufgeführten organischen Lösungsmitteln. Dreiwertiges Chrom kann auch im Reaktionsgemisch aus Chrom-VI-Verbindungen, z.B. Chromat, erzeugt werden, wenn man gleichzeitig ein Reduktionsmittel zugibt.

Die Umsetzung des 1:1-Chromkomplexes des Farbstoffes der Formel (II) bzw. (III) mit einem Farbstoff der Formel (III) bzw. (II) erfolgt zweckmässig in schwach saurem, neutralem oder schwach alkalischem Medium, in offenem oder geschlossenem Gefäss, bei erhöhter Temperatur, z.B. bei Temperaturen zwischen 50 und 120 °C. Man kann in organischen Lösungsmitteln, z.B. Alkoholen oder Ketonen arbeiten oder in wässriger Lösung, wobei dann Zusätze von Lösungsmitteln, wie z.B. von Alkoholen, Formamid, etc., gegebenenfalls die Umsetzung fördern können. Es können auch Hilfsmittel wie Tenside, Antischaummittel, Komplexbildner oder Amine, wie zum Beispiel Triethanolamin, zugegeben werden, welche die Anlagerung erleichtern und die Bildung von Nebenprodukten unterdrücken. In Wasser schwerlösliche Verunreinigungen können vorteilhaft mit organischen Lösungsmitteln ausgespült werden. Es empfiehlt sich im allgemeinen, möglichst äquivalente Mengen des chromhaltigen 1:1-Komplexes und des metallfreien Farbstoffes miteinander umzusetzen, wobei das Molekularverhältnis zwischen metallfreiem Farbstoff und 1:1-Komplex zweckmässig mindestens 0,85:1 und höchstens 1:0,85 beträgt. Ein Überschuss an 1:1 Komplex ist im allgemeinen vorteilhafter als ein Überschuss an metallfreiem Farbstoff.

Die Umsetzung des 1:1 Chromkomplexes des Farbstoffes der Formel (II) mit einem Gemisch aus dem Aminophenol der Formel (IV) und dem Aldehyd der Formel (V) erfolgt ebenfalls nach an sich bekannten Methoden, vorzugsweise in alkalischem bis schwach saurem Medium, wobei man vorzugsweise Aminophenol und Azofarbstoff in äquimolekularen Mengen einsetzt. Die Temperatur liegt vorzugsweise zwischen 60 und 100 °C, insbesondere bei etwa 80 °C.

Die Monoazoverbindungen der Formel (II) bzw. ihre Alkoxyderivate können in üblicher Weise hergestellt werden, indem man eine 1-Hydroxy- oder 1-Alkoxy-2-amino-4-nitrobenzol-6-sulfonsäure auf 1-Phenyl-3-methylpyrazol- 5-on bzw. die wie oben angegebenen im Phenylring substituierte Verbindung kuppelt.

Geeignete Kupplungskomponenten sind z.B.

1-Phenyl-3-methylpyrazol-5-on,

1-(2'-, 3'-oder 4'-Chlorphenyl)-3-methylpyrazol-5-on,

1-(2'-, 3'- oder 4-Methylphenyl)-3-methylpyrazol-5-on,

1-(2'-, 3'- oder 4'-Ethylphenyl)-3-methylpyrazol-5-on,

1-(2'-,3'-oder4'-Methoxyphenyl)-3-methylpyrazol-5-on,

1-(2'-, 3'- oder 4'-Ethoxyphenyl)-3-methylpyrazol-5-on,

1-(2'-,5'-oder3'-,4'-Dichlorphenyl)-3-methylpyrazol-5-on.

Die Azofarbstoffe der Formel (V) werden auf übliche Weise hergestellt, indem man ein gegebenenfalls substituiertes Anilin diazotiert und auf Salicylaldehyd kuppelt. Geeignete Aniline sind z.B. Anilin, 2-, 3- oder 4-Chloranilin, 2-, 3-oder 4-Methylanilin, 2-, 3- oder 4-Ethylanilin, 2-, 3-oder 4-Methoxyanilin, 2-, 3- oder 4-Ethoxyanilin, 2,3- oder 2,4- oder 2,5- oder 2,6- oder 3,4 oder 3,5-Dichloranilin, 2,4- oder 2,5-Dimethoxyanilin, 2-Chlor-5-methoxyanilin oder 3-Chlor-2-methoxyanilin.

Die Azofarbstoffe der Formel (V) werden in bekannter Art und Weise durch Umsetzung mit dem Aminophenol der Formel (IV) in einen Azomethin-azofarbstoff umgewandelt, wobei diese Reaktion wie oben beschrieben vorzugsweise in Gegenwart des 1:1 Chromkomplexes des Farbstoffes der Formel (II) durchgeführt wird, so dass man in einer «Eintopfreaktion» sofort den 1:2-Chromkomplex der obengenannten Formel I erhält.

Bei der Herstellung der erfindungsgemässen 1:2 Chromkomplexfarbstoffe kann man auch Mischungen verschiedener Azofarbstoffe der Formel II und/oder Mischungen verschiedener Azomethin-azofarbstoffe der Formel III verwenden. In diesen Fällen erhält man Gemische, welche verschiedene 1:2 Chromkomplexfarbstoffe der Formel I enthalten.

Die nach dem obigen Verfahren erhältlichen neuen 1:2 Chromkomplexe werden vorteilhaft in Form ihrer Salze, insbesondere Alkali-, vor allem Natrium- oder Lithiumsalze, oder auch Ammoniumsalze oder Salze von organischen Aminen mit positiv geladenem Stickstoffatom isoliert und eignen sich zum Färben und Bedrucken verschiedener Materialien, vor allem aber zum Färben stickstoffhaltiger Materialien, wie Seide, Leder und insbesondere Wolle, sowie auch für synthetische Fasern aus Polyamiden oder Polyurethanen. Sie sind vor allem zum Färben aus schwach alkalischem neutralem oder schwach saurem, z.B. essigsaurem Bade geeignet. Die so erhaltenen Färbungen sind gleichmässig und haben eine gute Licht-, Wasch-, Wasser-, Heisswasser-, Walk-, Dekatur- und Carbonisierechtheit.

Die als organische Aminsalze vorliegenden 1:2-Chromkomplexe, welche in organischen Lösungsmitteln löslich sind, können nach üblichen Methoden zum Färben von Spinnmassen, Polymerlösungen, Harzen, Lacken, Holzbeizen, Firnissen, Leder nach dem Aufsprühverfahren, Schreibtinten, organischen Flüssigkeiten und anodisch oxidiertem Aluminium verwendet werden.

Ähnliche Farbstoffe wie die erfindungsgemässen Farbstoffe werden in der französischen Patentschrift 1 599 875 beschrieben, die sich dadurch von der erfindungsgemässen Farbstoffen unterscheiden, dass die Diazokomponente des sulfogruppenhaltigen Liganden in 4-Stellung durch Sulfo und in 6-Stellung durch Nitro substituiert ist.

In den nachfolgenden Beispielen bedeuten die Teile, sofern nichts anderes angegeben wird, Gewichtsteile, die Prozente Gewichtsprozente, und die Temperaturen sind in Celsiusgraden angegeben.

Beispiel 1

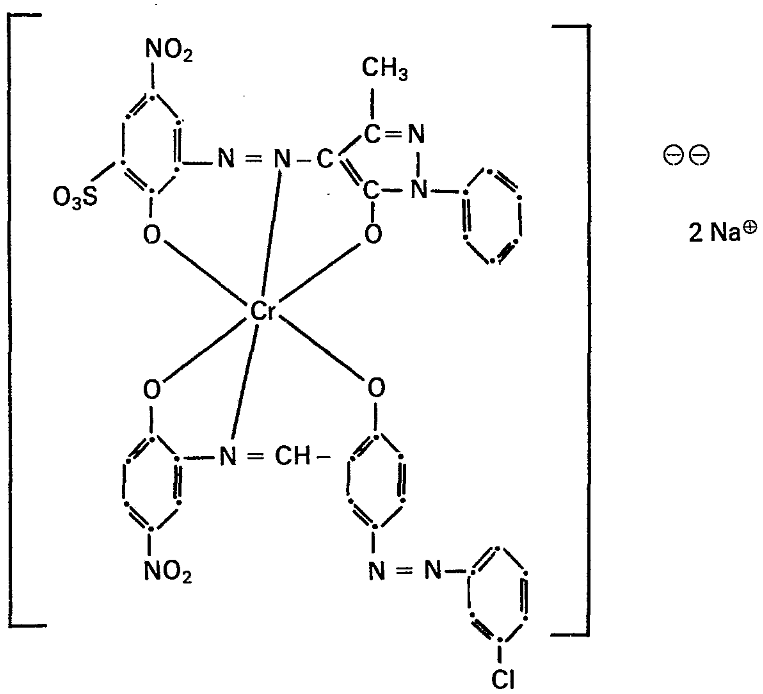

In 500 Teilen Wasser werden nacheinander, die komplexe 1:1 Chromverbindung, welche 41,9 Teile des Farbstoffes aus diazotierter 4-Nitro-2-aminophenol-6-sulfonsäure und 1-Phenyl-3-methyl-5-pyrazolon sowie 5,2 Teile Chrom enthält, 15,4 Teile 4-Nitro-2-aminophenol und 26,1 Teile des Monoazofarbstoffes aus diazotiertem 3-Chloranilin und Salicylaldehyd zugegeben. Die Reaktionsmischung wird, bis die Bildung des 1:2-Komplexfarbstoffes beendet ist, unter Rühren bei pH 5–9 und 80 °C gehalten. Bei Raumtemperatur gibt man 50 Teile Natriumchlorid zu, filtriert und trocknet anschliessend. Der Farbstoff färbt Wolle, Polyamid und Leder mit guten Echtheiten, in einem orangen Farbton.

Beispiel 2

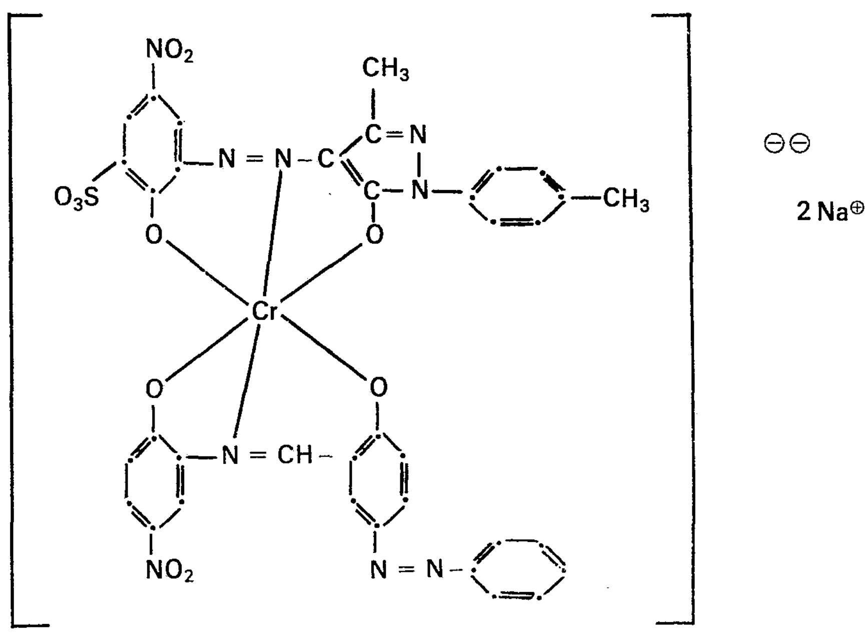

Der 1:1 Chromkomplex, der 43,4 Teile des Farbstoffes aus diazotierter 4-Nitro-2-aminophenol-6-sulfonsäure und 1-(4'-Methylphenyl)-3-methyl-5-pyrazolon sowie 5,2 Teile Chrom enthält, wird in 250 Teile Wasser und 250 Teile Triethanolamin eingetragen und mit 15,4 Teilen 4-Nitro-2-aminophenol und 22,6 Teilen des Monoazofarbstoffes aus diazotiertem Anilin und Salicylaldehyd versetzt und unter Rühren bei pH 7,5–8 und 80 °C gehalten, bis die Bildung des 1:2 Komplexfarbstoffes beendet ist. Bei Raumtemperatur neutralisiert man mit Salzsäure, filtriert, spült mit 750 Teilen 25%iger Natriumchloridlösung und trocknet den Farbstoff. Er färbt Wolle, Polyamid und Leder in einem orangen Farbton mit guten Echtheiten.

Beispiel 3

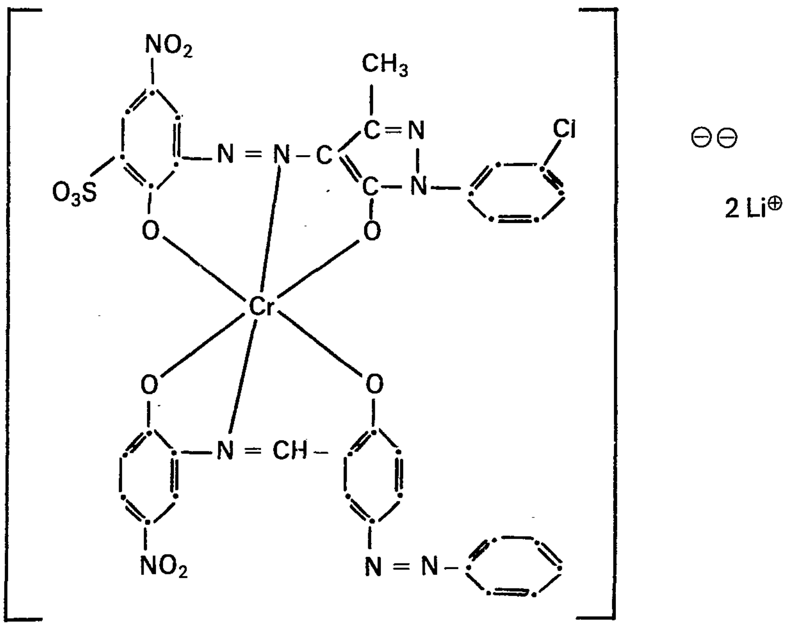

Die Lösung des in 250 Teilen n-Butanol nach bekannter Methode hergestellten 1:1 Chromkomplexes der 45,4 Teile des Farbstoffes aus diazotierter 4- Nitro-2-aminophenol-6- sulfonsäure und 1- (3'-Chlorphenyl)-3-methyl-5- pyrazolon sowie 5,2 Teile Chrom enthält, wird mit 500 Teilen Wasser verdünnt und unter Rühren bei pH 7–8 mit 15,4 Teilen 4-Nitro-2-aminophenol und 22,6 Teilen des Monoazofarbstoffes aus diazotiertem Anilin und Salicylaldehyd versetzt. n-Butanol wird azeotrop abdestilliert und bei 80 °C weiter gerührt, bis die Bildung des 1:2 Komplexfarbstoffes beendet ist. Bei Raumtemperatur gibt man 30 Teile Lithiumchlorid zu, filtriert, spült mit 50 Teilen n-Butanol nach und trocknet den Farbstoff, welcher Wolle, Polyamid und Leder in einem orangen Farbton mit guten Echtheiten färbt.

Farbstoffe mit ähnlichen Eigenschaften erhält man, wenn man in analoger Weise den 1:1 Chromkomplex des in Kolonne 1 genannten Azofarbstoffes mit dem in Kolonne 2 genannten Aminophenol und dem in Kolonne 3 genannten Azofarbstoff umsetzt. Man erhält 1:2 Chromkomplexe, welche Wolle und Polyamid in orangefarbenen Tönen mit guten Echtheiten färben.

Tabelle

| No. | 1. | 2. | 3. |
|---|---|---|---|
| 1. | 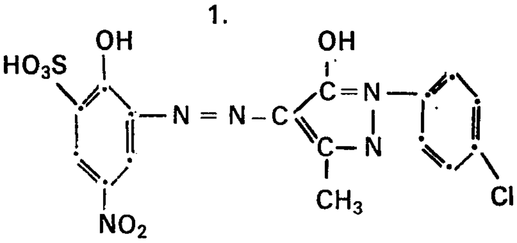 | 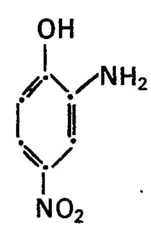 | 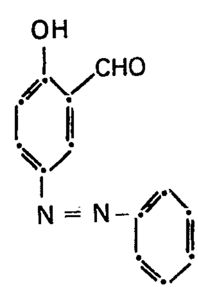 |
| 2. | 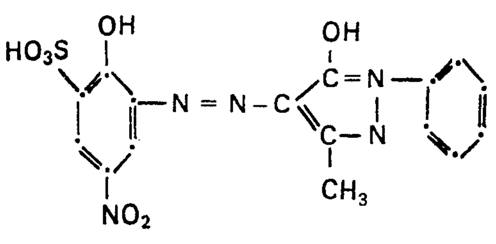 | do. | do. |

Tabelle (Fortsetzung)

| No. | 1. | 2. | 3. |
| --- | --- | --- | --- |
| 3. | 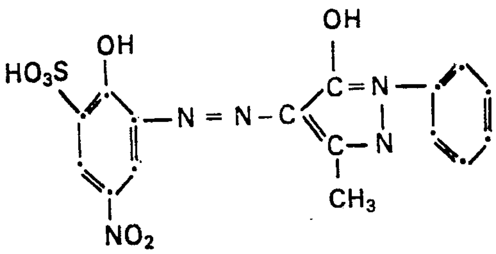 | 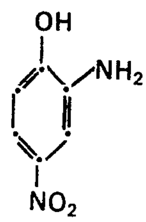 | 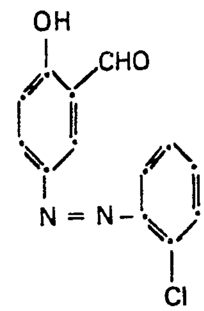 |
| 4. | do. | do. | 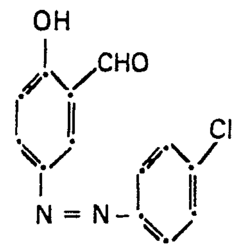 |
| 5. | do. | do. | 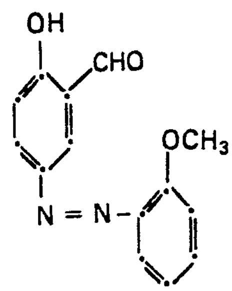 |
| 6. | do. | do. | 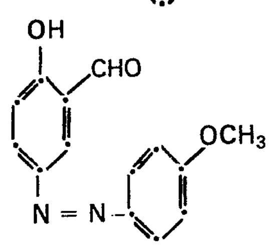 |
| 7. | do. | do. | 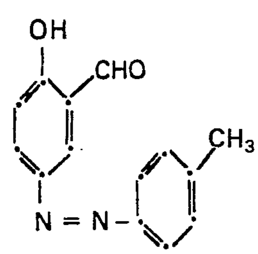 |
| 8. | do. | do. | 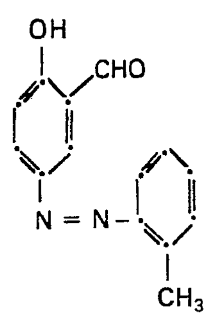 |

Tabelle (Fortsetzung)

| No. | 1. | 2. | 3. |
|---|---|---|---|
| 9. | 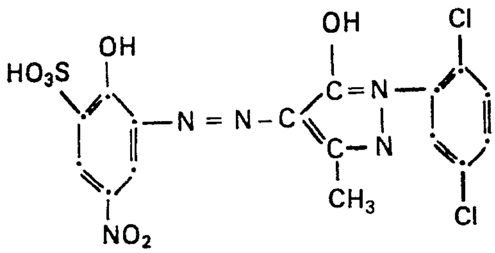 | 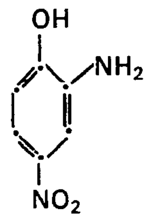 | 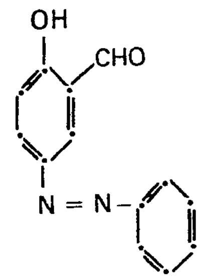 |
| 10. | 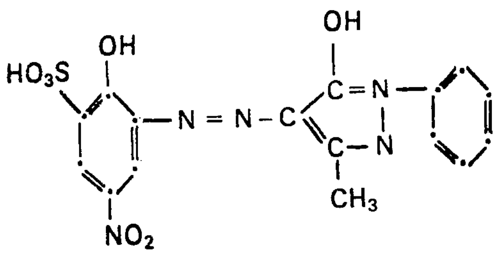 | do. | 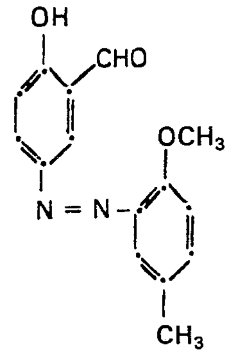 |
| 11. | do. | do. | 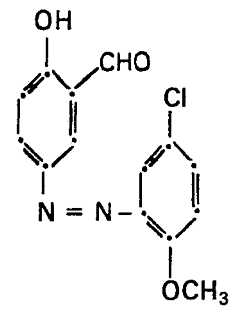 |
| 12. | 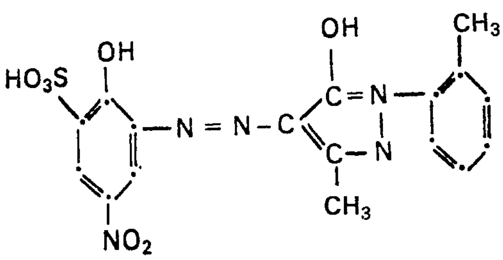 | do. | 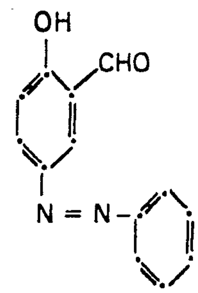 |
| 13. | do. | do. | 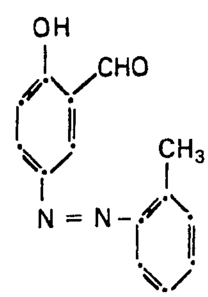 |

Tabelle (Fortsetzung)

| No. | 1. | 2. | 3. |
| --- | --- | --- | --- |
| 14. | 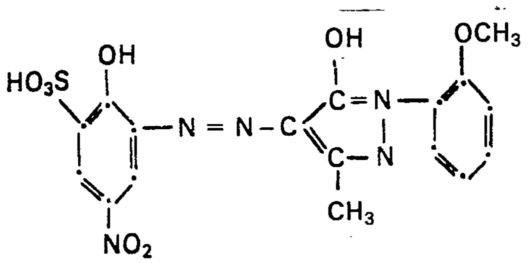 | 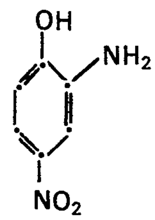 | 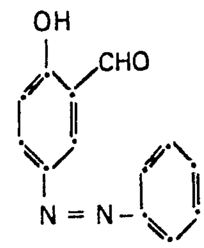 |
| 15. | 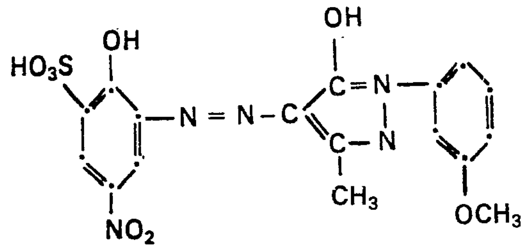 | do. | do. |

Färbevorschrift für Polyamid

100 Teile Polyamidstrickgarn werden bei 50° in ein Färbebad eingeführt, das auf 4000 Teile Wasser 2 Teile des Farbstoffes des Beispiels 1,4 Teile Ammoniumsulfat und 2 Teile eines Egalisierhilfsmittels enthält. Die Flotte wird im Verlaufe von 45 Minuten zum Sieden gebracht und während weiteren 45 Minuten bei Kochtemperatur gehalten. Darauf wird das Färbegut herausgenommen, mit kaltem Wasser gründlich gespült und getrocknet. Man erhält ein orangegefärbtes Polyamid mit guten Echtheitseigenschaften.

Färbevorschrift für Wolle

100 Teile Wollstrickgarn werden bei 50° in ein Färbebad eingeführt, das auf 4000 Teile Wasser 2 Teile des Farbstoffs des Tabellenbeispiels 2, 4 Teile Essigsäure 80% und 2 Teile eines Egalisierhilfsmittels enthält. Die Flotte wird im Verlaufe von 45 Minuten zum Sieden gebracht und während weiteren 45 Minuten bei Kochtemperatur gehalten. Darauf wird das Färbegut herausgenommen, mit kaltem Wasser gründlich gespült und getrocknet. Man erhält eine orangegefärbte Wolle mit guten Echtheitseigenschaften.

**Patentansprüche**

1. Chromkomplexfarbstoffe der Formel

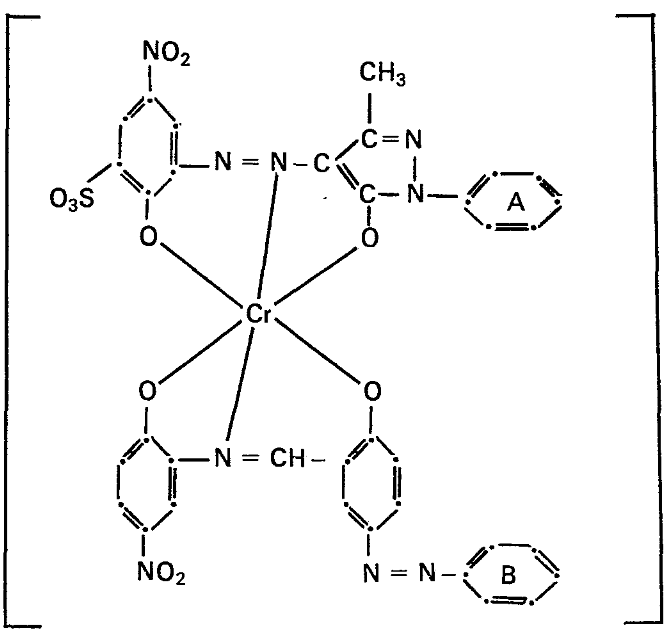

$\ominus\ominus$

2 $Me^{\oplus}$

(I)

worin die Phenylreste A und B unabhängig voneinander unsubstituiert sind oder ein- oder zweimal durch Chlor, Methyl, Ethyl, Methoxy oder Ethoxy substituiert sind und worin $Me^{\oplus}$ ein Kation bedeutet.

2. Chromkomplexfarbstoffe gemäss Anspruch

1, worin $Me^{\oplus}$ ein Lithium- oder Natriumkation ist.

3. Chromkomplexfarbstoffe gemäss Ansprüchen 1 und 2, worin die Phenylreste A und B zusammen nicht mehr als 2 der genannten Substituenten tragen.

4. Chromkomplexfarbstoff gemäss Anspruch 3 der Formel

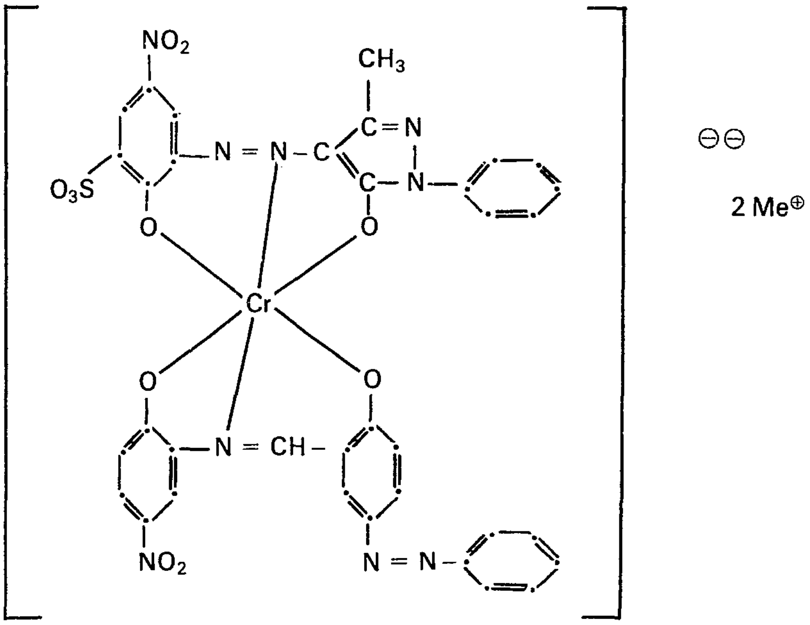

worin $Me^{\oplus}$ ein Kation bedeutet.

5. Verfahren zur Herstellung von Chromkomplexfarbstoffen der Formel

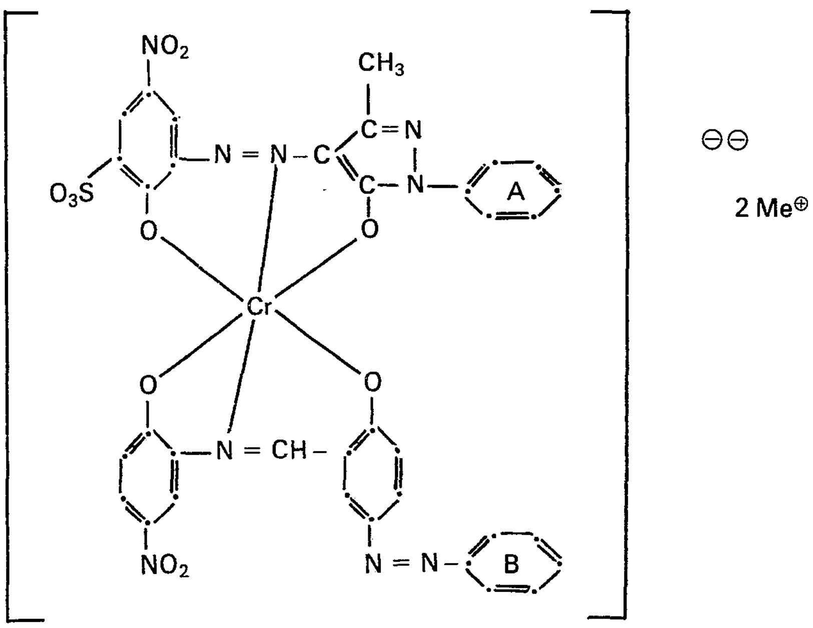

worin die Phenylreste A und B unabhängig voneinander unsubstituiert sind oder ein- oder zweimal durch Chlor, Methyl, Ethyl, Methoxy oder Ethoxy substituiert sind und worin $Me^{\oplus}$ ein Kation bedeutet, dadurch gekennzeichnet, dass man einen Azofarbstoff der Formel (II)

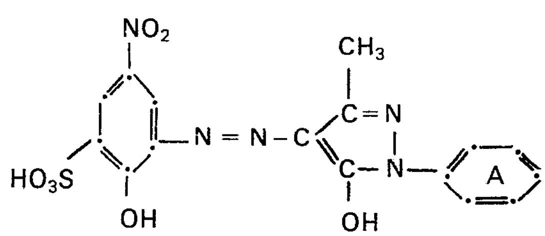 (II)

oder einen Azomethin-azofarbstoff der Formel (III)

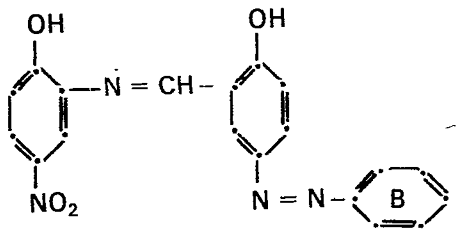

(III)

mit einem chromabgebenden Mittel zum 1:1-Chromkomplex umsetzt und diesen anschliessend mit dem nichtmetalisierten Farbstoff der Formel (III) oder (II) zum 1:2-Chromkomplex reagieren lässt.

6. Abwandlung des Verfahrens gemäss Anspruch 5, dadurch gekennzeichnet, dass man zuerst den 1:1 Chromkomplex des Azofarbstoffes der Formel (II) herstellt, und diesen anschliessend mit einem Gemisch aus dem Aminophenol der Formel IV

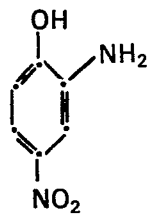

(IV)

und einem Azofarbstoff der Formel (V)

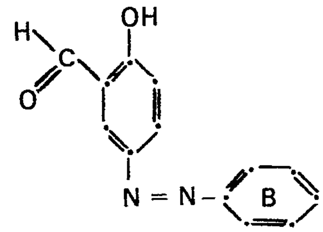

(V)

umsetzt

7. Verfahren gemäss Anspruch 6, dadurch gekennzeichnet, dass man von Farbstoffen der Formel II und V ausgeht, worin die Ringe A und B unsubstituiert sind.

8. Verwendung der Farbstoffe gemäss Ansprüchen 1–4 zum Färben oder Bedrucken von stickstoffhaltigen Materialien, insbesondere Wolle.

**Revendications**

1. Colorants complexes de chrome ayant la formule:

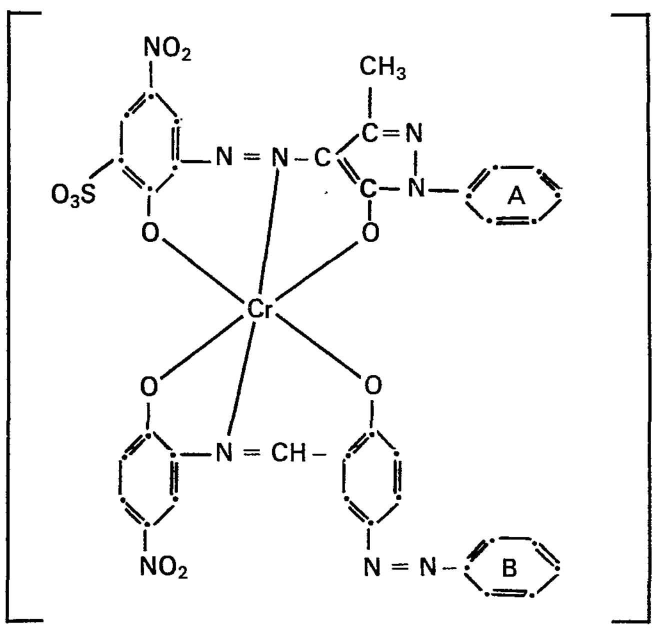

⊖⊖

2 Me⊕

(I)

dans laquelle les restes phényle A et B, indépendamment l'un de l'autre sont non-substitués ou bien sont substitués une ou deux fois par le chlore, les groupes méthyle, éthyle, méthoxy ou éthoxy, et dans laquelle Me⊕ désigne un cation.

2. Colorants complexes de chrome selon la revendication 1, dans lequels Me⊕ est un cation lithium ou un cation sodium.

3. Colorants complexes de chrome selon les revendications 1 et 2, dans lesquels les restes phényle ne portent ensemble pas plus de 2 des substituants mentionnés.

4. Colorant complexe de chrome selon la revendication 3 ayant la formule:

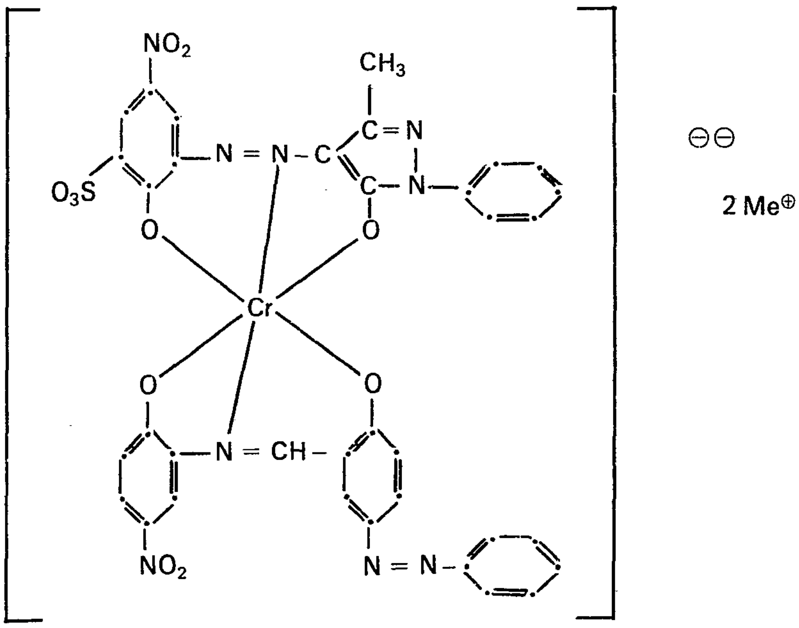

dans laquelle Me⊕ désigne un cation.

5. Procédé de préparation de colorants complexes de chrome ayant la formule:

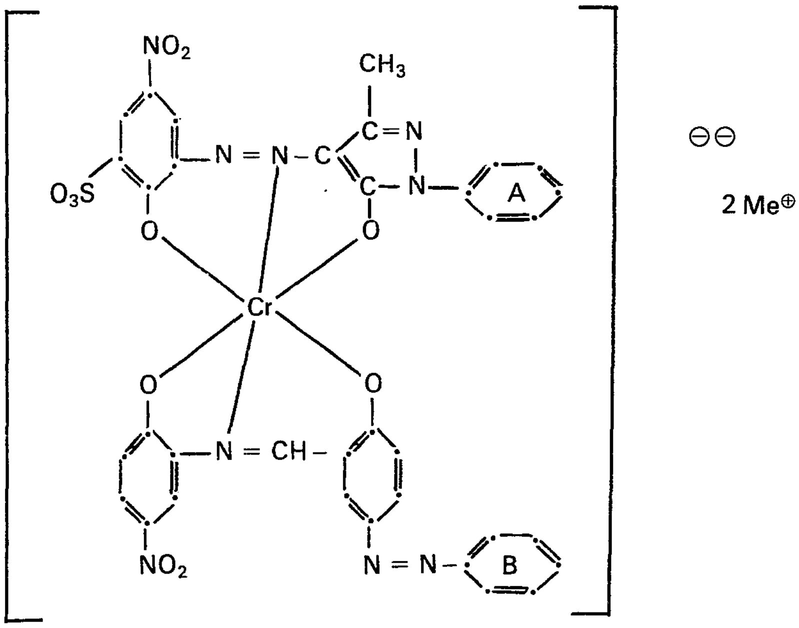

dans laquelle les restes phényle A et B, indépendamment l'un de l'autre, sont non-substitués ou bien substitués une ou deux fois par le chlore, les groupes méthyle, éthyle, méthoxy ou éthoxy, et dans laquelle Me⊕ désigne un cation, caractérisé par le fait qu'on fait réagir un colorant azoïque de formule (II)

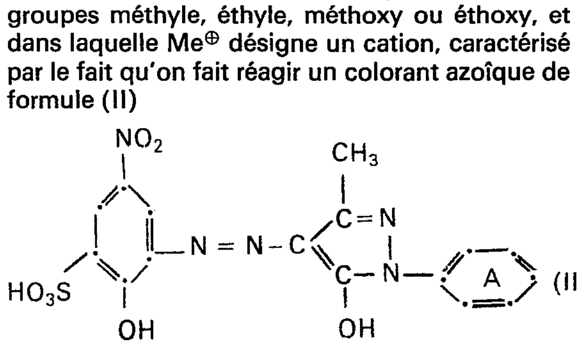

(II)

ou un colorant azoïque-azométhinique de formule (III)

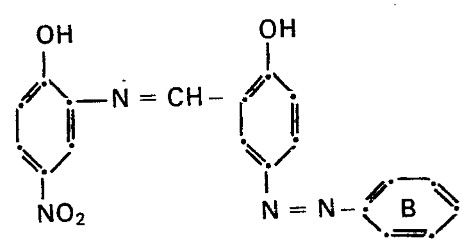

(III)

avec un agent cédant du chrome pour avoir le complexe de chrome-1:1 puis on fait réagir ce dernier avec le colorant non-métallé de formules

(III) ou (II) pour avoir le complexe de chrome-1:2.

6. Variante du procédé selon la revendication 5, caractérisée par le fait qu'on prépare tout d'abord le complexe de chrome 1:1 du colorant azoïque de formule (II), puis on fait réagir ce complexe avec un mélange constitué par l'aminophénol de formule (IV)

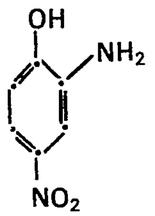

(IV)

et par un colorant azoïque de formule (V)

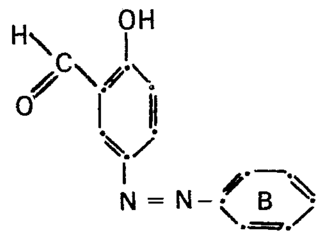

(V)

7. Procédé selon la revendication 6, caractérisé par le fait qu'on part de colorants des formules II et V, dans lesquels les noyaux A et B sont non-substitués.

8. Utilisation des colorants selon les revendications 1 à 4, pour la teinture ou l'impression de matières azotées, en particulier de la laine.

**Claims**

1. A chrome-complex dye of the formula (I)

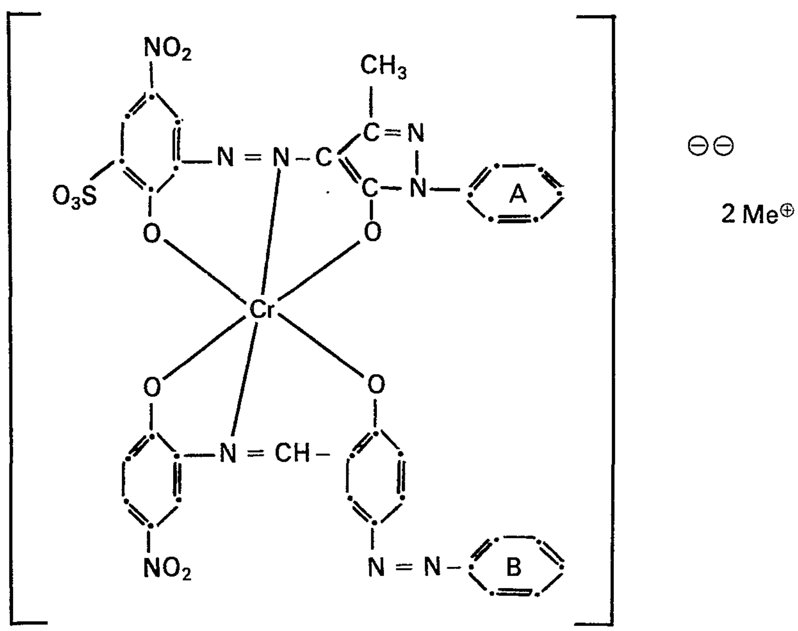

(I)

wherein the phenyl groups A and B independently of one another are each unsubstituted or are mono- or disubstituted by chlorine, methyl, ethyl, methoxy or ethoxy, and wherein $Me^{\oplus}$ is a cation.

2. A chrome-complex dye according to Claim 1, wherein $Me^{\oplus}$ is a lithium or sodium cation.

3. A chrome-complex dye according to Claims 1 and 2, wherein the phenyl groups A and B together carry no more than two of the substituents mentioned.

4. A chrome-complex dye according to Claim 3 of the formula

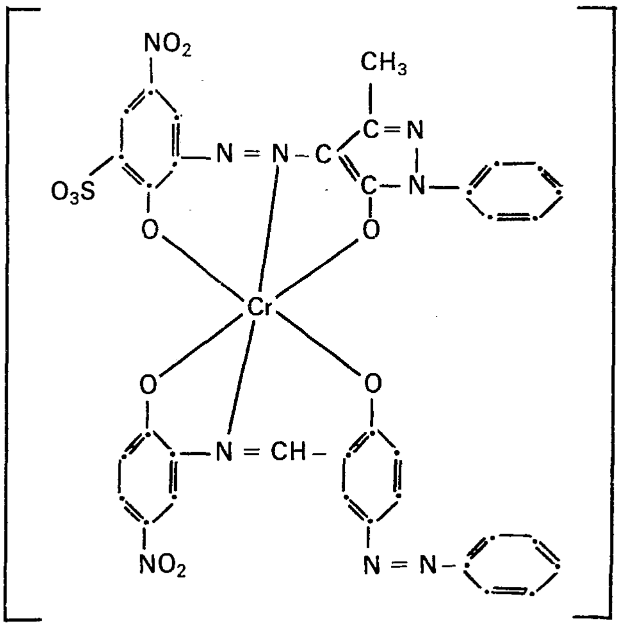

$\ominus\ominus$

2 $Me^{\oplus}$

wherein $Me^{\oplus}$ is a cation.

5. A process for producing a chrome-complex dye of the formula

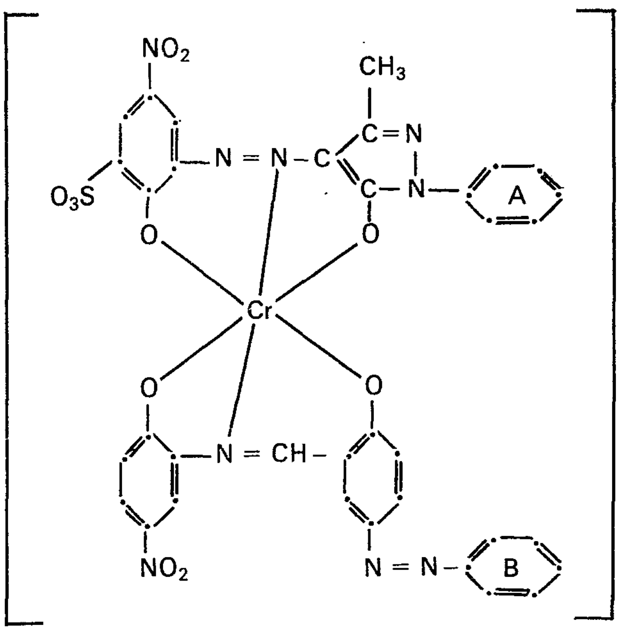

$\ominus\ominus$

2 $Me^{\oplus}$

wherein the phenyl groups A and B independently of one another are unsubstituted or are mono- or disubstituted by chlorine, methyl, ethyl, methoxy or ethoxy, and wherein $Me^{\oplus}$ is a cation, which process cimprises reacting an azo dye of the formula (II)

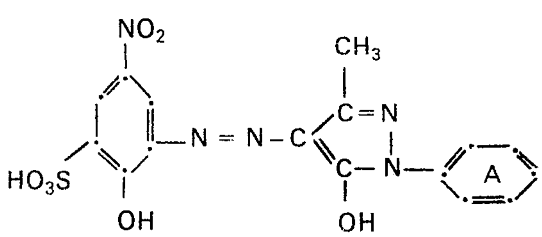

(II)

or an azomethine-azo dye of the formula (III)

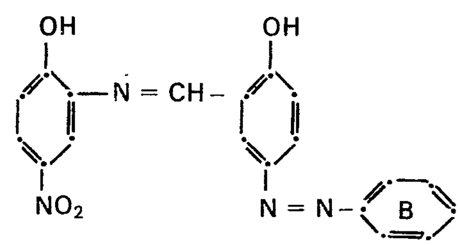

(III)

with a chromium-releasing agent to give the 1:1-chrome complex, and subsequently reacting

this with the unmetallised dye of the formula (III) or (II) to obtain the 1:2-chrome complex.

6. Modification of the process according to Claim 5, whereby the 1:1-chrome complex of the azo dye of the formula (II) is firstly produced, and this is then reacted with a mixture of the aminophenol of the formula (IV)

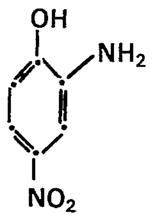

(IV)

and an azo dye of the formula (V)

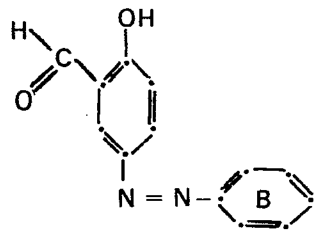

(V).

7. A process according to Claim 6, wherein the starting materials are dyes of the formulae II and V, wherein the rings A and B are unsubstituted.

8. Use of the dyes according to Claims 1–4 for dyeing and printing nitrogen-containing materials, in particular wool.